(19)

**Europäisches Patentamt**
**European Patent Office**
**Office européen des brevets**

(11) **EP 3 131 296 A1**

(12) **EUROPEAN PATENT APPLICATION**

(43) Date of publication:
**15.02.2017 Bulletin 2017/07**

(21) Application number: **15306292.2**

(22) Date of filing: **13.08.2015**

(51) Int Cl.:
*H04N 19/70* (2014.01)　　　*H04N 19/46* (2014.01)
*H04N 19/463* (2014.01)　　*H04N 19/186* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **ANDRIVON, PIERRE**
　**35576 CESSON SEVIGNE CEDEX (FR)**
• **LASSERRE, SEBASTIEN**
　**35576 CESSON SEVIGNE CEDEX (FR)**
• **BORDES, PHILIPPE**
　**35576 CESSON SEVIGNE CEDEX (FR)**

(74) Representative: **Huchet, Anne**
**TECHNICOLOR**
**1-5, rue Jeanne d'Arc**
**92130 Issy-les-Moulineaux (FR)**

(54) **COLOR REMAPPING INFORMATION PAYLOAD SIZE COMPRESSION**

(57)　　Color remapping information is encoded for use at a decoder by using a Supplemental Enhancement Information message, with the value of an existing syntax element interpreted as a differentially coded value. The differentially coded value is then used at a decoder with a previously decoded parameter to generate a color remapping parameter for a current portion of a picture. The differentially coded values enable color remapping information to be conveyed to a decoder using less space in the Supplemental Enhancement Information message than sending the parameters directly.

**100**

Figure 1

EP 3 131 296 A1

**Description**

FIELD OF THE INVENTION

The present principles relate to content based, dynamic metadata for color remapping.

BACKGROUND OF THE INVENTION

Color Remapping Information (CRI) is information which can be used in mapping one color space to another. This type of information can be useful when converting from Wide Color Gamut (WCG) video to another format, for example. Color Remapping Information was adopted in ISO/IEC 23008-2:2014/ITU-T H.265:2014 High Efficiency Video Coding (HEVC) specification and is being implemented in the Ultra HD Blu-ray specification. It is also being considered in WD SMPTE ST 2094.

Such CRI information can be carried by standard HEVC CRI Supplemental Enhancement Information (SEI) messages, which have a maximum payload size of 850 bytes. As CRI metadata can be updated every access unit, for example every picture, and can be transmitted over a limited bandwidth link or stored on low-density media, there are advantages in decreasing the payload size of CRI information.

SUMMARY OF THE INVENTION

These and other drawbacks and disadvantages of the prior art are addressed by the present principles, which are directed to a method and apparatus for CRI payload size compression.

According to an aspect of the present principles, there is provided a method for encoding of color remapping information. The method comprises differentially coding values representative of color remapping parameters, and inserting said differentially coded values in a supplemental enhancement information message.

According to another aspect of the present principles, there is provided an apparatus for encoding of color remapping information. The apparatus comprises a differential coder that produces differentially coded values representative of color remapping parameters, and a syntax coder that inserts the differentially coded values representative of color remapping parameters into a supplemental enhancement information message.

According to an aspect of the present principles, there is provided a method for decoding of color remapping information. The method comprises parsing a supplemental enhancement information message for syntax elements representative of color remapping parameters, and generating color remapping parameters using the syntax elements as differentially coded values.

According to an aspect of the present principles, there is provided an apparatus for decoding of color remapping information. The apparatus comprises a bitstream parser operating on a supplemental enhancement information message to find syntax elements representative of color remapping parameters, and a processor operating on the syntax elements as differentially coded values to generate color remapping parameters.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 shows one embodiment of an encoding method using the present principles.
Figure 2 shows one embodiment of an encoding apparatus using the present principles.
Figure 3 shows one embodiment of a decoding method using the present principles.
Figure 4 shows one embodiment of a decoding apparatus using the present principles.

DETAILED DESCRIPTION

An approach for compression of Color Remapping Information (CRI) payload size is herein described. Table 1 shows that the maximum theoretical payload size of an HEVC CRI SEI message that carries color remapping information is 850 byes.

The improvements to existing HEVC syntax and semantics can be quite straightforwardly applied to, derived for, or ported to syntax and semantics of standards, for example Consumer Electronics Association CEA-861 (G) or Society of Motion Picture and Television Engineers SMPTE ST 2094.

CRI information comprises a first set of parameters describing video signal characteristics of a color remapped video signal, and a second set of parameters describing parameters of a processing model, such as, but not limited to, a one dimensional lookup table per component, or matrix, or one dimension per component in a standardized CRI case. The standardized CRI maximum theoretical size is 850 bytes, however, dynamic metadata proposed by at least two prior approaches are typically around 130 bytes maximum per picture. Thus, the present approach aims at reducing the payload size of standardized CRI in order to have comparable weight to other dynamic metadata and reduce fragmentation of CRI information in low-sized packets, such as metadata CEA packets defined for HDMI and derived from SMPTE specifications, for example. This latter point advantageously enables reduction of latency of CRI remapped picture reconstruction and the probability of CRI packet loss.

Syntax elements representative of the computation/processing model can correspond, for the worst case, to more than 98% of CRI payload size (6686 bits out of 6793 bits). Then, it is proposed to reduce the size corresponding to the following syntax elements that one can split into two categories: syntax elements representative of a Look Up Table model and a matrix model:

- pre_lut_coded_value[ c ]][ i ], *pre_lut_target_value[c ][ i ] and their post equivalent.*
- *color_remap_coeffs[c ][ i ]*

Indeed those syntax elements represent more than 97% (830 out of 850 bytes) of the total size of CRI payload. The Look Up Table and matrix payload reduction can be combined.

Look Up Table payload reduction can be shown using several embodiments.

In a first embodiment of Look Up Table reduction, *\*_ lut_\*_value* elements are coded differentially successively.

*Example:*

DPCM technique (predictor is previously coded/defined syntax element value). Following syntax elements are changed from

| |
|---|
| **pre_lu_coded_value**[ c ][ i ] |
| **pre_lut_target_value**[ c ][ i ] |

into:

| |
|---|
| **pre_lut_coded_diff_value**[ c ][ i ] |
| **pre_lut_target_diff_value**[ c ][ i ] |

with the following interpretation:

pre_lut_*_diff_value[c][i] represents the value to be added to the previously defined pre_lut_*_diff_value[c][i-1]. pre_lut_*_diff_value[c][0] is the first value, not coded differentially.

And the values of pre_lut_coded_value[ c ][ i ] and pre_lut_coded_value[ c ][ i ] are derived as follows:

$$\text{pre\_lut\_coded\_value[ c ][ i ]} = (\,(i{==}0)\,?\,0 : \text{pre\_lut\_coded\_value[ c ][ i-1 ]}\,) + \text{pre\_lut\_coded\_diff\_value[ c ][ i ]}$$

$$\text{pre\_lut\_target\_value[ c ][ i ]} = (\,(i{==}0)\,?\,0 : \text{pre\_lut\_target\_value[ c ][ i-1 ]}\,) + \text{pre\_lut\_target\_diff\_value[ c ][ i ]}$$

Those _diff syntax elements can be coded as se(v) , u(v) or u(X).

The same reasoning applies for *post_*elements.

In a variation of this embodiment, The values of pre_lut_coded_value[ c ][ i ] and pre_lut_coded_value[ c ][ i ] are derived as follows:

$$pre\_lut\_coded\_value[\ c\ ][\ i\ ] = (\ (i==0)\ ?\ 0 : pre\_lut\_coded\_value[\ c\ ][\ i\text{-}1\ ]\ ) +$$
$$pre\_lut\_coded\_diff\_value[\ c\ ][\ i\ ]$$
$$+\ pre\_lut\_coded\_diff\_pred\_value[\ c\ ][\ i\ ]$$

$$pre\_lut\_target\_value[\ c\ ][\ i\ ] = (\ (i==0)\ ?\ 0 : pre\_lut\_target\_value[\ c\ ][\ i\text{-}1\ ]\ ) +$$
$$pre\_lut\_target\_diff\_value[\ c\ ][\ i]$$
$$+\ pre\_lut\_target\_diff\_pred\_value[\ c\ ][\ i\ ]$$

where :

$$pre\_lut\_coded\_diff\_pred\_value[\ c\ ][\ i\ ] = (\ 2^{color\_remap\_input\_bit\_depth} - 1 -$$
$$pre\_lut\_coded\_value[\ c\ ][\ i\text{-}1\ ]\ )\ /\ (\ pre\_lut\_num\_val\_minus1[\ c\ ] - i + 1)$$

$$pre\_lut\_target\_diff\_pred\_value[\ c\ ][\ i\ ] = (\ 2^{color\_remap\_remap\_bit\_depth} - 1 -$$
$$pre\_lut\_target\_value[\ c\ ][\ i\text{-}1\ ]\ )\ /\ (\ pre\_lut\_num\_val\_minus1[\ c\ ] - i + 1)$$

In a second embodiment of Look Up Table payload reduction, *_lut_*_value elements are coded differentially against a given predefined curve/pattern, known as a "predictor".

This prediction curve/pattern can be known or inferred from previously coded syntax elements in the same SEI (e.g. *color_remap_transfer_function*) or from the Video Usability Information (VUI) (*transfer_characteristics*) of AVC/HEVC (subpart E.2) (Advanced Video Coding/High Efficiency Video Coding).

In a variant of this embodiment, this prediction curve/pattern can be known or inferred from previously coded syntax elements in the same CEA InfoFrame or EDID (Extended Display Identification Data) packet (e.g. EOTF (Electro-Optical Transfer Function) field of Dynamic Range and Mastering block of CEA-861.3) or from another InfoFrame or EDID packet (e.g. Basic Display Parameters and Feature Blocks of CEA-861 F).

*Example:*

1) A minimum, a mean, a median or a maximum value is used as a predictor.
2) The predictor is defined by a curve e.g. "y = x" (or another one) for both *_lut_coded_value and *_lut_target_value
3) The predictor depends on signal characteristics of the input video/picture on which CRI is applied (e.g. using VUI or InfoFrame) and/or the remapped/targeted video signal characteristics (for example, using syntax elements of CRI existing when color_remap_video_signal_info_present_flag is present or EDID).

If an input video signal, on which CRI is applied, is characterized by an OETF (OptoElectrical Transfer Function) as defined in SMPTE ST 2084 and the remapped video signal is defined by Rec. 709 OETF, then a prediction curve for pre_lut_*_value syntax elements value are based on EOTF ST 2084 and post_lut_*_value syntax elements value are based on OETF Rec. 709.

A third embodiment, which is compliant with the first two embodiments, has *_lut_coded_value semantics changed as follows:

pre_lut_coded_value[ c ][ i ] specifies the value of the i-th pivot point for the c-th component. The number of bits used to represent pre_lut_coded_value[ c ][ i ] is color_remap_input_bit_depth.

pre_lut_target_value[ c ][ i ] specifies the value of the i-th pivot point for the c-th component. The number of bits used to represent pre_lut_target_value[ c ][ i ] is color_remap_bit_depth.

post_lut_coded_value[ c ][ i ] has the same semantics as pre_lut_coded_value[ c ][ i ], with pre replaced by post, except that the number of bits used to represent post_lut_coded_value[ c ][ i ] is color remap bit depth.

One advantage of Embodiment 3 is that the payload carriage reduction percentage for each of the syntax elements is:

reduction_percent =

$$( 1 - color\_remap\_bit\_depth / ( ( ( color\_remap\_bit\_depth + 7 ) >> 3 ) << 3 ) ) \times 100$$

e.g. with color_remap_bit_depth = color_remap_input_bit_depth = 10 bits, reduction_percent = 37.5%

In a fourth embodiment of Look Up Table payload reduction, which is compliant with the first three embodiments,

| | |
|---|---|
| **color_remap_input_bit_depth** | u(8) |
| **color_remap_bit_depth** | u(8) |

are changed to:

| | |
|---|---|
| **color_remap_input_bit_depth_minus8** | ue(v) |
| **color_remap_bit_depth_minus8** | ue(v) |

with the following modified semantics (with respect to the HEVC CRI standard):

**color_remap_input_bit_depth_minus8** plus 8 specifies the bit depth of the luma and chroma components or the RGB components of the associated pictures for purposes of interpretation of the color remapping information SEI message. When any color remapping information SEI messages are present with the value of color_remap_input_bit_depth_minus8 plus 8 not equal to the bit depth of the coded luma and chroma components or that of the coded RGB components, the SEI message refers to the hypothetical result of a transcoding operation performed to convert the coded video to a converted video with bit depth equal to color_remap_input_bit_depth_minus8 plus 8.

The value of coior_remap_input_bit_depth_minus8 shall be in the range of 0 to 8, inclusive. Values of coior_remap_input_bit_depth_minus8 from 9 to 255, inclusive, are reserved for future use by ITU-T |ISO/IEC. Decoders shall ignore all color remapping SEI messages that contain a coior_remap_input_bit_depth_minus8 in the range of 9 to 255, inclusive, and bitstreams shall not contain such values.

**color_remap_bit_depth_minus8** plus 8 specifies the bit depth of the output of the color remapping function described by the color remapping information SEI message.

The value of color_remap_bit_depth_minus8 shall be in the range of 0 to 8, inclusive. Values of color_remap_bit_depth_minus8 in the range of 9 to 255, inclusive, are reserved for future use by ITU-T ISO/IEC. Decoders shall ignore all color remapping SEI messages that contain a value of color_remap_bit_depth_minus8 or in the range of 9 to 255, inclusive.

Two embodiments of matrix payload reduction are described below.

In a first embodiment of matrix payload reduction, *color_remap_coeffs* are coded differentially per row or per column or per a given scheme. For example, define *Mat3* as a 3x3 matrix to be coded:

$$Mat3 = \begin{matrix} a & b & c \\ d & e & f \\ g & h & i \end{matrix}$$

To code differentially using a row difference:

'a' value is coded as 'a'
'b' value is coded as 'a-b'
'c' value is coded as 'b-c'

A similar method can be performed for columns or diagonals to produce differential values.

In a second embodiment of matrix payload reduction, *color_remap_coeffs* are coded differentially against a predefined 3x3 matrix pattern, known as a "predictor".

This prediction curve/pattern can be known or inferred from previously coded syntax elements in the same SEI (e.g. *color_remap_primaries* and/or *color_remap_matrix_coefficients*) and/or from the VUI (*color_primaries* and/or *matrix_coeffs*) of AVC/HEVC (subpart E.2).

In a variant of this embodiment, this prediction curve/pattern can be known or inferred from previously coded syntax elements in the same CEA InfoFrame or EDID packet (e.g. *display_primaries_\** of Dynamic Range and Mastering block with Static Metadata Descriptor Type 1 of CEA-861.3) or from another InfoFrame or EDID packet (e.g. Color Characteristics block of CEA-861 F).

One example of this embodiment would be to subtract a predictor from Mat3. The predictor can, for example, be an identity matrix or an identity matrix multiplied by a gain. Typically the gain depends on the bit-depth on which the matrix coefficients are represented (for example, if a matrix has coefficient represented with 8-bit, identity matrix gain would be $(2^8)-1 = 255$ or $(2^{(8-1)})-1 = 127$).

Another example is when a predictor depends on signal characteristics of the input video/picture on which CRI is applied, for example, using VUI or InfoFrame, and/or the remapped/targeted video signal characteristics (for example, using syntax elements of CRI existing when *color_remap_video_signal_ info_present_flag* is present or EDID).

If an input video signal to which CRI is applied is represented in BT.2020 colorspace and the remapped video signal is represented in sRGB/Rec. 709 colorspace then prediction matrix coefficients for color_remap_coeffs value syntax elements value are based on RGB BT.2020 to RGB BT.709 conversion matrix (actually this is a concatenation of two matrices that are RGB BT.2020 to XYZ and XYZ to RGB BT.709 ).

Decoders operating on CRI data encoded in an SEI message parse the bitstream and the SEI message for those parameters used to carry differential data representative of color remapping information. After the color remapping information is extracted, it can be used to convert from one color space to another.

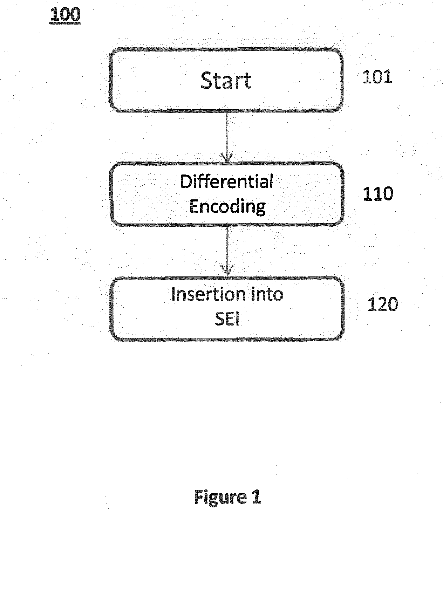

One embodiment of an encoding method 100 using the present principles is shown in Figure 1. The method commences at Start block 101 and proceeds to block 110 for differential coding of color remapping parameters in the manner described above. The color remapping parameters can be parsed from an existing syntax element, or input from some other process or user. Control then proceeds from block 110 to block 120 for insertion of the differentially encoded color remapping parameters into an SEI (Supplemental Enhancement Information) message.

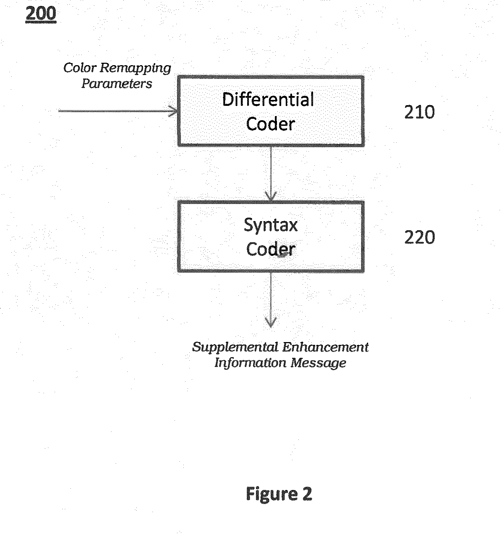

Another embodiment of an encoding apparatus 200 using the present principles is shown in Figure 2. The apparatus comprises a Differential Coder 210 that receives color remapping parameters on a first input and produces a differential value in the manner described above on its output. The output of Differential Coder 210 is in signal connectivity with the input of Syntax Coder 220. Syntax Coder 220 receives the differentially encoded color remapping parameters and inserts them into a Supplemental Enhancement Information (SEI) message.

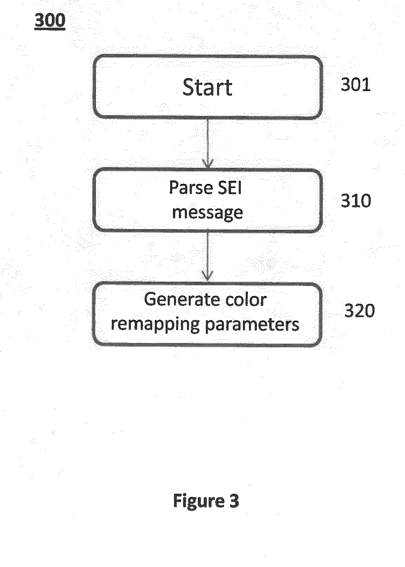

Another embodiment of a decoding method 300 using the present principles is shown in Figure 3. The method commences at Start block 301 and proceeds to block 310 for parsing of an SEI message to extract differentially coded color remapping parameters. Control proceeds from block 310 to block 320 for generating color remapping parameters from the differentially encoded color remapping parameters. The color remapping parameters can be used to convert video from one color space to another color space.

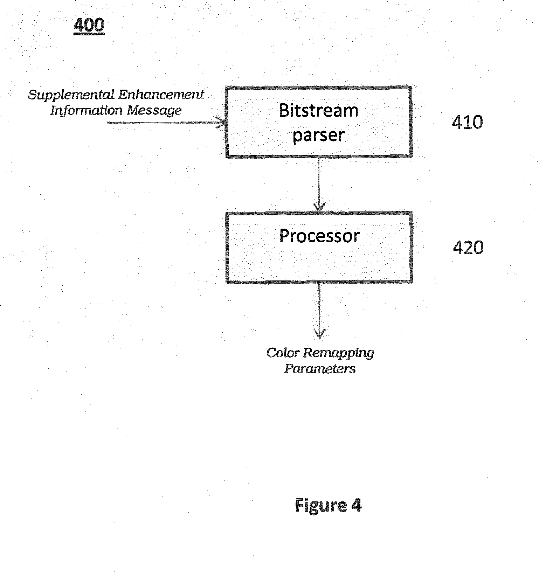

Another embodiment of a decoding apparatus 400 using the present principles is shown in Figure 4. The apparatus comprises a Bitstream Parser 410 that parses an SEI message, received on a first input port, to extract differentially coded color remapping parameters on its output port. The output of Bitstream Parser 410 is in signal connectivity with the input of Processor 420. Processor 420 receives the differentially coded color remapping parameters from Bitstream Parser 410 and proceeds to generate color remapping parameters on its output. The color remapping parameters can be generated using previously generated color remapping parameters that were generated from previous differentially coded color remapping parameters.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, the present principles enable a decreased payload size of Color Remapping Information for carriage in video compression protocols, such as SMPTE-based or derived standards. The implementation of these embodiments can be in MPEG or HDMI-enabled devices, such as set-top boxes, Blu-ray disc ROM (BD-ROM) players, and televisions, for example.

**Table 1: HEVC CRI SEI message and payload size worse case (evil bit-stream)**

**HEVC Color remapping information SEI message syntax (ITU-T H.265:2014)**

| color_remapping_info( payloadSize ) { | Descriptor | Max payload |
|---|---|---|
| color_remap_id | ue(v) | 63b |
| color_remap_cancel_flag | u(1) | 1b |
| if( !color_remap_cancel_flag ) { | | |
| color_remap_persistence_flag | u(1) | 1b |
| color_remap_video_signal_info_present_flag | u(1) | 1b |
| if( color_remap_video_signal_info_present_flag ) { | | |
| color_remap_full_range_flag | u(1) | 1b |
| color_remap_primaries | u(8) | 8b |
| color_remap_transfer_function | u(8) | 8b |
| color_remap_matrix_coefficients | u(8) | 8b |
| } | | |
| color_remap_input_bit_depth | u(8) | 8b |
| color_remap_bit_depth | u(8) | 8b |
| for( c = 0; c < 3; c++ ) { | | |
| pre_lut_num_val_minus1[ c ] | u(8) | 3x8b |
| if( pre_lut_num_val_minus1[ c ] > 0 ) | | |
| for( i = 0; i  <=  pre_lut_num_val_minus1[ c ]; i++ ) { | | |
| pre_lut_coded_value[ c ][ i ] | u(v) | 33x2x3x8b |
| pre_lut_target_value[ c ][ i ] | u(v) | 33x2x3x8b |
| } | | |
| } | | |
| color_remap_matrix_present_flag | u(1) | 1b |
| if( color_remap_matrix_present_flag ) { | | |
| log2_matrix_denom | u(4) | 4b |
| for( c = 0; c < 3; c++ ) | | |
| for( i = 0; i < 3; i++ ) | | |
| color_remap_coeffs[ c ][ i ] | se(v) | 9x33b |
| } | | |
| for( c = 0; c < 3; c++ ) { | | |
| post_lut_num_val_minus1[ c ] | u(8) | 3x8b |
| if( post_lut_num_val_minus1[ c ] > 0 ) | | |
| for( i = 0; i  <=  post_lut_num_val_minus1[ c ]; i++ ) { | | |
| post_lut_coded_value[ c ][ i ] | u(v) | 33x2x3x8b |
| post_lut_target_value[ c ][ i ] | u(v) | 33x2x3x8b |
| } | | |
| } | | |
| } | | |
| } | | |

Total = 6793 bits => 850 Bytes

**Claims**

1. A method for encoding of color remapping information, comprising:

    differentially coding values representative of color remapping parameters; and
    inserting said differentially coded values in a supplemental enhancement information message.

**2.** The method of Claim 1, wherein the insertion of said differentially coded values replaces another syntax element.

**3.** The method of Claim 1 or 2, wherein differential coding is performed relative to a previously coded syntax element.

**4.** The method of Claim 1 or 2, wherein the differential coding is performed relative to a predictor.

**5.** The method of Claim 4, wherein the predictor is a matrix.

**6.** An apparatus for encoding of color remapping information, comprising:

a differential coder configured to produce differentially coded values representative of color remapping parameters; and
a syntax coder configured to insert said differentially coded values representative of color remapping parameters in a supplemental enhancement information message.

**7.** The apparatus of Claim 6, wherein the insertion of said differentially coded values replaces another syntax element.

**8.** The apparatus of Claim 6 or 7, wherein differential coding is performed relative to a previously coded syntax element.

**9.** The apparatus of Claim 6 or 7, wherein the differential coding is performed relative to a predictor.

**10.** The apparatus of Claim 9, wherein the predictor is a matrix.

**11.** A method for decoding of color remapping information, comprising:

parsing a supplemental enhancement information message for syntax elements representative of color remapping parameters; and
generating color remapping parameters using said syntax elements as differentially coded values.

**12.** The method of Claim 11, wherein a syntax element representative of color remapping parameters replaces another syntax element.

**13.** The method of Claim 11 or 12, wherein differential coding is performed relative to a previously coded syntax element.

**14.** The method of Claim 11 or 12, wherein the differentially coded values are used to generate remapping parameters relative to a predictor.

**15.** The method of Claim 14, wherein the predictor is a matrix.

**16.** An apparatus for decoding of color remapping information, comprising:

a bitstream parser configured to operate on a supplemental enhancement information message to find syntax elements representative of color remapping parameters; and
a processor configured to operate on said syntax elements as differentially coded values to generate color remapping parameters.

**17.** The apparatus of Claim 16, wherein a syntax element representative of color remapping parameters replaces another syntax element.

**18.** The apparatus of Claim 16 or 17, wherein differential coding is performed relative to a previously coded syntax element.

**19.** The apparatus of Claim 16 or 17, wherein the differentially coded values are used to generate remapping parameters relative to a predictor.

**20.** The apparatus of Claim 19, wherein the predictor is a matrix.

**21.** A non-transitory, computer readable storage medium having video signal data encoded thereupon, comprising:

differentially coded values representative of color remapping parameters; wherein said differentially coded values are inserted in a supplemental enhancement information message.

<u>100</u>

Figure 1

<u>**200**</u>

Color Remapping
Parameters

```
          ┌─────────────────┐
          │   Differential  │    210
  ───────►│      Coder      │
          └─────────────────┘
                   │
                   ▼
          ┌─────────────────┐
          │     Syntax      │    220
          │      Coder      │
          └─────────────────┘
                   │
                   ▼
```

Supplemental Enhancement
Information Message

**Figure 2**

300

Start — 301

Parse SEI message — 310

Generate color remapping parameters — 320

Figure 3

**400**

Supplemental Enhancement
Information Message

→ | Bitstream parser | 410

↓

| Processor | 420

↓

Color Remapping
Parameters

**Figure 4**

Europäisches
Patentamt

European
Patent Office

Office européen
des brevets

# EUROPEAN SEARCH REPORT

Application Number

EP 15 30 6292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/166705 A1 (THOMSON LICENSING [FR]) 16 October 2014 (2014-10-16) * abstract * * figures 4, 6, 10, 11 * * page 1, line 25 - page 2, line 16 * * page 12, line 20 - line 24 * * page 13 * * page 22 - page 26 * * page 25, line 32 - page 26, line 5 * * page 28, line 4 - line 9 * ----- | 1-21 | INV. H04N19/70 H04N19/46 H04N19/463 H04N19/186 |
| X | BORDES (TECHNICOLOR) P: "Colour Mapping SEI message", 15. JCT-VC MEETING; 23-10-2013 - 1-11-2013; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-O0363, 30 October 2013 (2013-10-30), XP030115446, * abstract * * page 5 - page 6 * ----- | 1-21 | |
| Y | WO 2015/095381 A1 (QUALCOMM INC [US]) 25 June 2015 (2015-06-25) * abstract * * paragraph [0054] * * paragraph [0168] - paragraph [0176] * * table 5 * * claims 8, 20 * ----- -/-- | 1-21 | TECHNICAL FIELDS SEARCHED (IPC) H04N |

The present search report has been drawn up for all claims

| Place of search | Date of completion of the search | Examiner |
|---|---|---|
| The Hague | 20 January 2016 | Wedi, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 15 30 6292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LI X ET AL: "Non-SCE1: Asymmetric 3D LUT for Color Gamut Scalability", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0063-v2, 9 January 2014 (2014-01-09), XP030115532, * abstract * * page 4 * | 1-21 | |
| Y | JOSHI R ET AL: "HEVC Screen Content Coding Draft Text 3", 20. JCT-VC MEETING; 10-2-2105 - 18-2-2015; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-T1005, 22 February 2015 (2015-02-22), XP030117412, * section D.2.32 * * section D.3.32 * | 1-21 | |

TECHNICAL FIELDS
SEARCHED      (IPC)

The present search report has been drawn up for all claims

| Place of search | Date of completion of the search | Examiner |
|---|---|---|
| The Hague | 20 January 2016 | Wedi, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

# EP 3 131 296 A1

## ANNEX TO THE EUROPEAN SEARCH REPORT
## ON EUROPEAN PATENT APPLICATION NO.

EP 15 30 6292

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | | Publication date | Patent family member(s) | | Publication date |
|---|---|---|---|---|---|
| WO 2014166705 | A1 | 16-10-2014 | AU | 2014253414 A1 | 26-11-2015 |
| | | | CA | 2909006 A1 | 16-10-2014 |
| | | | CN | 105230019 A | 06-01-2016 |
| | | | EP | 2984836 A1 | 17-02-2016 |
| | | | KR | 20150139586 A | 11-12-2015 |
| | | | WO | 2014166705 A1 | 16-10-2014 |
| WO 2015095381 | A1 | 25-06-2015 | TW | 201537958 A | 01-10-2015 |
| | | | US | 2015172670 A1 | 18-06-2015 |
| | | | WO | 2015095381 A1 | 25-06-2015 |

EPO FORM P0459

For more details about this annex : see Official Journal of the European Patent Office, No. 12/82